# EUROPÄISCHE PATENTSCHRIFT

(11) **EP 2 495 480 B1**
(45) Veröffentlichungstag und Bekanntmachung des Hinweises auf die Patenterteilung: **03.10.2018**
(21) Anmeldenummer: 11156924.0
(22) Anmeldetag: 04.03.2011
(51) Int. Cl.: F16K 31/00

(54) **Regelventil**
Control valve
Soupape de régulation

(43) Veröffentlichungstag der Anmeldung: 05.09.2012
(73) Patentinhaber: Georg Fischer JRG AG, 4450 Sissach (CH)
(72) Erfinder: Bürli, Kurt, 4463 Buus (CH)
(74) Vertreter: Fenner, Seraina

(56) Entgegenhaltungen:
- EP-A2- 0 829 795
- DE-A1-102005 001 310
- GB-A- 920 924
- GB-A- 2 190 175
- US-A- 4 032 068
- US-A1- 2007 075 152
- US-B2- 7 249 575

## Beschreibung

Die Erfindung betrifft ein Regelventil für Warmwasser-Zirkulationssysteme mit einem Gehäuse in dem zwei Ventile vorzugsweise Sitzventile die jeweils einen Thermostaten aufweisen angeordnet sind.

In mehrstöckigen Häusern werden meist zu den Warmwasserleitungen Zirkulationsleitungen angebracht. Diese verlaufen meist parallel zu den Steigleitungen und sind einerseits mit dem Wassererwärmer und andererseits mit der Steigleitung verbunden. Dadurch lässt sich eine Zirkulation des Warmwassers erzielen, da das in den Steigleitungen abgekühlte Wasser über die Zirkulationsleitung und über eine Zirkulationspumpe wieder zurück zum Wassererwärmer geleitet wird, sowie das direkt aus dem Wassererwärmer stammende Wasser wieder in die Steigleitung eingespeist wird. So dass bei der Entnahme von Warmwasser an der Verbraucherstellen nur noch kleine Wassermengen die abgekühlt sind ungenutzt durchlaufen bis das Wasser mit der gewünschten Temperatur entnommen werden kann.
Im Regelfall liegt die Warmwassertemperatur im Bereich von 50°C, was für die normalen Anwendungen wie bspw. Waschen, Duschen, Spülen usw. völlig ausreichend ist und auch sinnvoll ist im Bezug auf die Energieeinsparung.

Jedoch sind solche Wasserversorgungsanlagen gerne Ansammlungsplätze für Legionellen, eine Art von Bakterien die für die Legionärskrankheit verantwortlich ist. Ältere Menschen sowie kranke Menschen sind von den Legionellen stärker gefährdet. Legionellen vermehren sich zudem sehr stark bei einer Warmwassertemperatur von 25°-50°C. Die thermische Abtötung der Legionellen beginnt bei rund 60°C. Je höher die Temperatur des Warmwassers umso kürzer ist die Absterbezeit der Legionellen. Bei einer Wassertemperatur von 60°C beträgt die Absterbezeit ca. 30 Minuten, während sie bei 70°C nur wenige Minuten andauert.
Ein grosses Gefahrenpotential stellen Krankenhäuser, Altenheime, Hotels und ähnlich grosse Gebäude mit weit verzweigten Warmwasserleitungssystemen dar. Da durch das stehende Warmwasser in den Leitungen die Vermehrung der Legionellen unterstützt wird.

Um dieser Gefahr vorzubeugen, kann im speziellen im Bereich der Risikogruppen wie in Altenheimen und Spitälern oder grösseren Wohnbauten eine thermische Desinfektion durchgeführt werden.
Bisher wurde zur Regelung der Warmwassertemperatur in Warmwasser-Zirkulationssystemen regelnde Ventile eingesetzt die ein Thermostatelement bzw. ein Dehnstoffelement enthalten, welches sich durch die Erwärmung ausdehnt und den Durchlassquerschnitt des Ventils verengt. Bei einer Abkühlung entsprechend umgekehrt. Solche Ventile sind bereits bekannt, die EP 1 167 841 A2 offenbart ein solches. Diese Ventile werden in der Regel in den Rücklaufleitungen eingesetzt, vorzugsweise kurz vor der Zirkulationssammelleitung. Die Regelventile stellen das hydraulische Gleichgewicht der Zirkulationsstränge untereinander her, sodass jeder Zirkulationsstrang den nötigen Volumenstrom die seinem Temperaturverlust entspricht erhält. Das bedeutet, dass sich bei kurzen Leitungen grosse Differenzdrücke und kleine Volumenströme durch die Regelventile einstellen und im Gegensatz dazu, dass lange Leitungen bzw. weit von der Warmwassererzeugung entfernte Rohrstränge einen kleinen Differenzdruck aber grosse Volumenströme aufweisen. Dadurch wird gewährleistet, dass alle Warmwasserleitungen innerhalb des Systems gleichmässig mit Warmwasser durchströmt werden.
Die DE 102 26 289 C1 offenbart ein Regelventil welches sich eignet die Warmwassertemperatur in den Leitungen während des Normalbetriebs zu regeln sowie auch während des Desinfektionsvorgangs, während dem das Warmwasser deutlich höhere Temperaturen aufweist. Dazu werden zwei Regulierkolben eingesetzt die übereinander angeordnet sind. Zur Volumenstromregelung bewegen sich die Kolben einerseits auf sich zu, um den Volumenstrom zu minimieren und andererseits von sich weg, um ihn zu vergrössern. Nachteilig an dieser Lösung ist, dass während des Desinfektionsvorgangs und bei erreichen der maximal gewünschten Temperatur des Regelventils immer noch mit einem Volumenstrom durchströmt wird, wenn auch mit einem sehr geringen. Das bedeutet, dass die Leitungen die ihren Desinfektionsvorgang durch das Erreichen der Temperatur abgeschlossen haben trotzdem noch hoch temperiertes Wasser zugeleitet bekommen und so den übrigen Leitungen die die Temperatur noch nicht erreicht haben das wärmere Wasser vorweg nehmen. Das begrenzt die mögliche Anzahl der Leitungen die ein solches System haben kann. Zudem neigt das offenbarte Regelventil durch seinen Aufbau zu Verkalkungen an den Durchflussöffnungen.

Es ist Aufgabe der Erfindung ein Regelventil und ein damit verbundenes Verfahren zu entwickeln, welches sich eignet die Warmwassertemperatur bzw. den Volumenstrom in den Zirkulationssträngen in zwei unterschiedlichen Warmwassertemperaturbereichen von null auf maximalen Volumenstrom des Regelventils zu regeln.

Diese Aufgabe wird erfindungsgemäss dadurch gelöst, dass die zwei thermostatisch geregelten Ventile, den Volumenstrom unabhängig von einander regeln.

Das heisst, dass die zwei im Gehäuse angeordneten Ventile, vorzugsweise Sitzventile, nicht zusammenwirken sondern jedes für sich den Volumenstrom während der entsprechenden Warmwasserphase regelt. Sitzventile sind so ausgebildet, dass sich das Schliessglied in diesem Fall der Ventilteller vom Sitz bzw. Ventilsitz abhebt und so dem Wasser den Durchfluss ermöglicht. Zum Schliessen des Sitzventils wird der Ventilteller wieder auf dem Ventilsitz aufgesetzt und dichtet dadurch den Durchfluss ab.
Im Gegensatz dazu sind Kolben bzw. Schiebeventile so aufgebaut, dass sie durch ihren in die Ventilbohrung hineinragenden Kolben leicht zum Verkalken neigen. Sie weisen meist einen Kolben auf der unterschiedliche hintereinander angeordnete Durchmesser aufweist und durch das Verschieben des Kolbens verändert sich der Ringspalt und dadurch der Volumenstrom des durchfliessenden Wassers.
Wenn nun während des Normalbetriebs, das heisst bei einer Warmwassertemperatur von ca. 50°C die Temperatur in den Leitungen auf ein niedrigeres Temperaturniveau abfällt bspw. 3 - 5°C tiefer, wird dies durch das erste Ventil geregelt. Der Thermostat bzw. das Dehnstoffelement was aus dem Stand der Technik, bereits bekannt ist, verfestigt sich bzw. schrumpft. Dadurch regelt das Ventil proportional zur Temperaturdifferenz und hält den voreingestellten Wert, welcher ca. 3 - 5°C unter der Vorlauftemperatur eingestellt ist. Die Temperaturangaben sind nur als Beispiel zu verstehen, die Ventile können selbstverständlich auch auf andere Temperaturen eingestellt werden. Wenn nun ein Desinfektionsvorgang durchgeführt werden soll, wird das Wasser bspw. im Wassererwärmer auf 75°C - 80°C erhitzt. Worauf bei einer Wasserzirkulation die Wassertemperatur in den Leitungen langsam ansteigt und sich das erste Ventil zur Regelung des Normalbetriebs langsam schliesst, da es sich nur öffnet wenn es unter den eingestellten Wert bspw. 50°C fällt. Da das erste Ventil sich bei dieser Temperatur schliesst und das wärmere Wasser zum zweiten Ventil gelangen soll, weist der Ventilzapfen eine kleine Grundmengenbohrung, für die nach der Norm des deutschen Vereins des Gas- und Wasserfachs DVGW W554 vorgeschriebene Durchlassmenge bzw. Grundmenge an Wasser auf. Beim zweiten Ventil beginnt sich der Thermostat bspw. bei einer einstellbaren Temperatur von 70°C - 75°C langsam auszudehnen, somit strömt vorerst das wärmere Wasser nur über die kleine Grundmengenbohrung im Ventilzapfen in den Bereich des zweiten Ventils, welches den Desinfektionsvorgang auf dem höheren Temperaturniveau einleitet. Je wärmer nun das Wasser im Bereich des Thermostaten bzw. des zweiten Ventils wird, desto mehr dehnt sich der Thermostat aus und öffnet durch das Verschieben des Ventilzapfens einen Durchlass und der Volumenstrom des einströmenden wärmeren Wassers erhöht sich rasch, wodurch die gewünschte Desinfektionstemperatur des Wassers im Strang schnell erreicht ist. Wenn die gewünschte Temperatur erreicht ist, schliesst das zweite Ventil. Der Thermostat dehnt sich soweit aus, dass er mit dem daran befestigten Ventilteller am Ventilsitz ansteht und das Regelventil so abdichtet. Das Wasser am zweiten Thermostaten kühlt dann wieder langsam ab worauf der Thermostat mit Hilfe der Arbeitsfeder wieder zusammengedrückt wird und so das wärmere Wasser einströmen kann bis die Temperatur erreicht ist bei der sich der Thermostat von neuem soweit ausgedehnt hat bis er das Ventil wieder schliesst. Dieses Regelverhalten geht so lange vor sich bis der Desinfektionsvorgang abgeschlossen ist und der Wassererwärmer wieder auf Normalbetriebstemperatur gebracht wird. Wie schon oben erwähnt regelt das erste Ventil, vorzugsweise ein Sitzventil wobei auch Schiebeventile denkbar sind die jedoch eher zu Verkalkungen neigen, den Normalbetrieb. Das heisst, das Ventil regelt das Warmwasser im Temperaturbereich von bspw. 35°-50°C. Der Temperaturbereich ist frei wählbar. Das zweite Ventil, welches ebenso vorzugsweise ein Sitzventil ist, regelt den Desinfektionsvorgang und kommt bei den höheren Temperaturen zum Einsatz und regelt die Wassertemperatur bzw. den Volumenstrom.
Das Ventil zur Regelung des Desinfektionsvorganges dehnt sich durch das Dehnstoffelement bei erreichter maximaler Temperatur soweit aus, dass es vollständig geschlossen ist. Das bringt den Vorteil mit sich, dass das wärmere Wasser nun für die weiteren Stränge zur Verfügung steht. Durch das optimale Regelverhalten der Ventile wird der hydraulische Abgleich bei beiden Temperaturniveaus gewährleistet.

Ein weiterer Vorteil beim erfindungsgemässen Regelventil besteht darin, dass der Volumenstrom des Ventils zur Regelung des Desinfektionsvorgangs sich ebenso weit öffnen lässt wie das Ventil für den Normalbetrieb. Das bedeutet, dass es denselben Volumenstrom erzielen kann wie das erste Ventil und dadurch der Desinfektionsvorgang sehr rasch durchgeführt wird. Was den Vorteil bringt, dass bei grossen Anlagen eine prozessoptimierte thermische Desinfektion durchgeführt werden kann, wodurch Energieeinsparungen zustande kommen.

Zudem zeichnet sich die Erfindung dadurch aus, dass während des Normalbetriebes der erste Thermostat den voreingestellten Betriebstemperaturwert bzw. den Volumenstrom regelt und der zweite Thermostat für den Desinfektionsvorgang in Serie umspült wird. Somit ist der zweite Thermostat bereits auf dem gleichen Temperaturniveau wie der Erste und dadurch eine kurze Reaktionszeit.

Des Weiteren weist das zweite Regelventil einen Ventilzapfen auf, der ebenfalls zur Volumenstromregelung beiträgt. Solange sich das Regelventil im Normalbetrieb befindet ist der Ventilzapfen geschlossen und es strömt nur durch die kleine Grundmengenbohrung im Ventilzapfen ein geringer Volumenstrom. Diese Grundmengenbohrung ist auch dazu da, dass das auf Desinfektionstemperatur erwärmte Wasser zur Ventilregelung des Desinfektionsvorganges gelangt. Da das Ventil für den Normalbetrieb bspw. bei einem voreingestellten Wert von 50°C schliesst und kein Wasser mehr durchströmen lässt, muss das wärmere Wasser über einen anderen Weg zum Ventil bzw. Thermostaten der Desinfektionsregelung gelangen. Das geschieht dann über diese Grundmengenbohrung, wobei diese Grundmengenbohrung auch durchströmt wird, wenn das erste Ventil geöffnet ist. Das wärmere Wasser strömt langsam in den Bereich des Ventils, der Thermostat dehnt sich aus und drückt gegen den Ventilzapfen, der verschiebt sich und öffnet einen grösseren Durchlass für das wärmere Wasser, wie schon zuvor beschrieben.

Vorzugsweise sind der Ventilzapfen und der dagegen stossende Ventilteller zwei separate Teile. Jedoch ist es auch vorstellbar den Ventilzapfen und den anliegenden Ventilteller als ein Teil auszubilden.

Das Verfahren zur Regelung der Wassertemperatur für Warmwasser-Zirkulationssystme während des Normalbetriebs und während des Desinfektionsvorgangs, zeichnet sich dadurch aus, dass während des Desinfektionsvorgangs der Regelbereich des Ventils für den Desinfektionsvorgang zwischen null l/min und dem maximalen durchlassbaren Volumenstrom des Ventils für den Normalbetrieb liegt.
Das vermeidet ein unnötiges Durchströmen der Leitungen mit heissem Wasser, die die Desinfektionstemperatur bereits erreicht haben. dass die geforderte Grundmenge an durchzufliessendem Wasser über die Grundmengenbohrung zugeführt wird. Bei Kolbenventilen geschieht dies über den Ringspalt der sich zwischen dem Kolben und der Ventilbohrung bildet, wodurch das Ventil auch zu Verkalkungen neigt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Schnittansicht des Regelventils in Normalbetriebsstellung, d. h., während des Reglungsprozesses bei Warmwasser für den alltäglichen Gebrauch und die Grundmengenbohrung ist aktiv,
- Fig. 2: eine Schnittansicht des Regelventils während der erreichten max. Wassertemperatur für den alltäglichen Gebrauch sowie der Beginn des Desinfektionsvorgangs und die Grundmengenbohrung ist aktiv,
- Fig. 3: eine Schnittansicht des Regelventils während des Desinfektionsvorgangs mit max. möglichem Volumenstrom,
- Fig. 4: eine Schnittansicht des Regelventils während des Desinfektionsvorgangs und der erreichten max. Desinfektionstemperatur somit mit Volumenstrom null, die Grundmengenbohrung ist inaktiv,
- Fig. 5: ein Diagramm des Volumenstromverlaufs und der entsprechenden Wassertemperatur im Regelventil während den unterschiedlichen Regelstellungen der Ventile bzw. der Thermostaten und

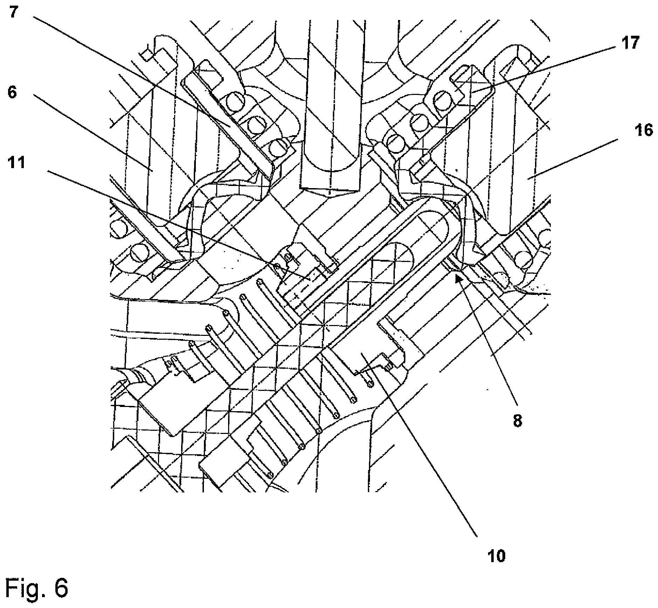

- Fig. 6: eine Detailansicht des Kernbereichs der Fig. 3 bzw. den Kernbereich des Regelventils während des Desinfektionsvorgangs mit max. Volumenstrom.

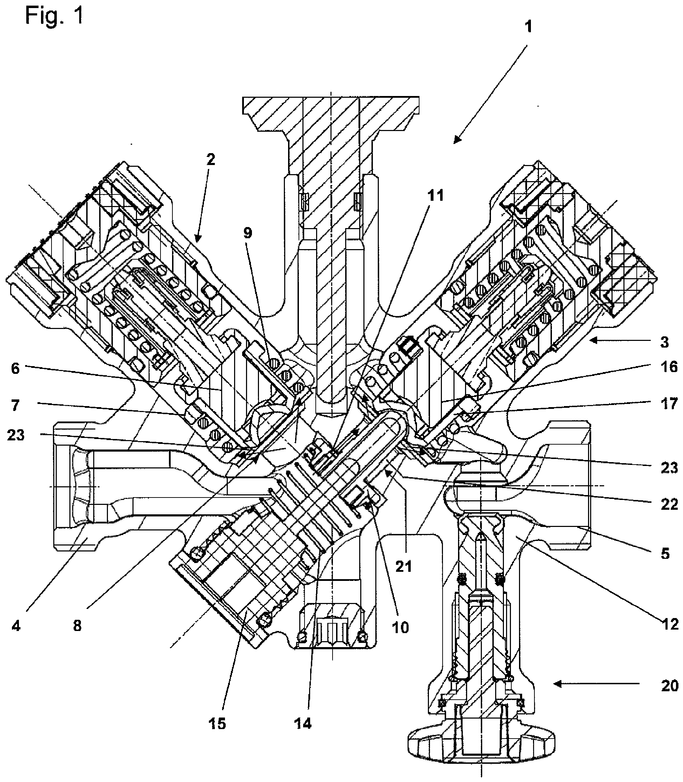

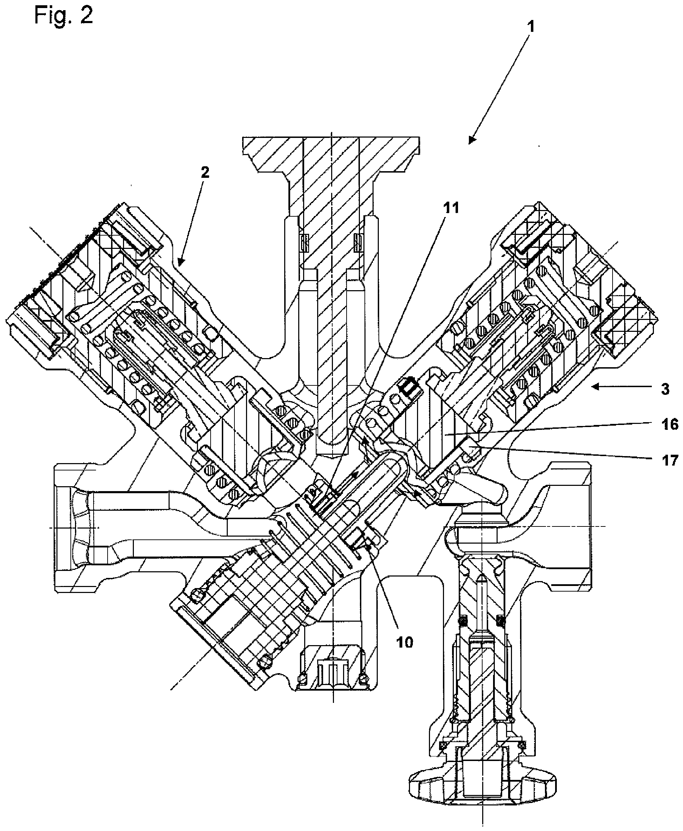

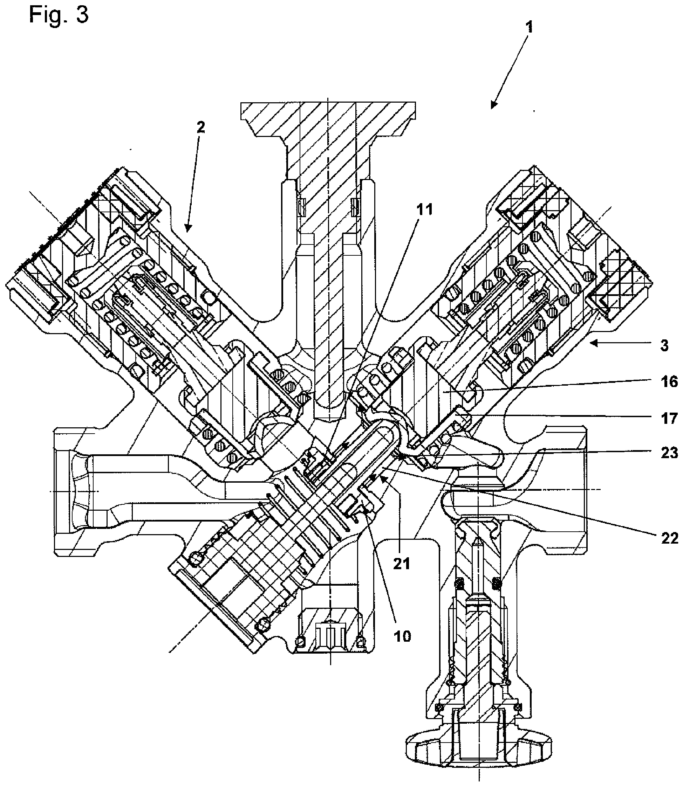

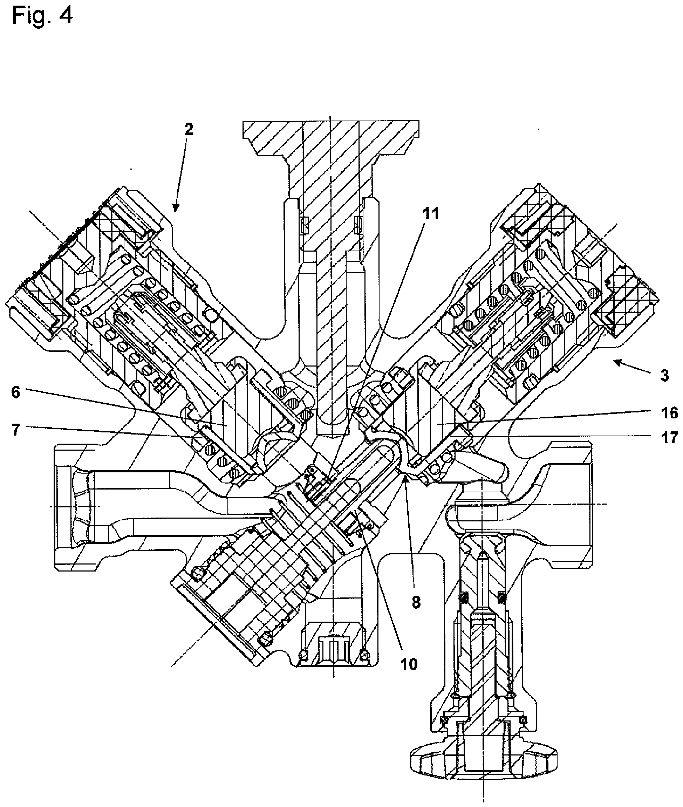

Fig. 1 zeigt das Regelventil 1 während des Normalbetriebs. Das heisst, es regelt mit Hilfe von Ventil 2 das Warmwasser im Warmwasser-Zirkulationssystem. Die Temperatur des Warmwassers für den alltäglichen Gebrauch liegt im Bereich von 36°C - 60°C. Das Ventil 2, welches vorzugsweise als Sitzventil ausgebildet ist, ist in Fig. 1 offen dargestellt und ermöglicht dem warmen Wasser den Durchfluss. Das bedeutet, dass der Thermostat 6, welcher sich durch ein Dehnstoffelement auszeichnet das sich bei tieferen Temperaturen zusammenzieht und bei höheren ausdehnt und sich mit Unterstützung der Arbeitsfeder 9 zusammenzieht, da die Wassertemperatur in der Leitung gesunken ist. Der Ventilspalt 23 beim Ventilsitz 8 ist geöffnet, das Warmwasser hat die Möglichkeit zur Zirkulation. Das Ventil 2 schliesst sich langsam entsprechend der Warmwassertemperatur. Hat das warme Wasser die voreingestellte Temperatur erreicht, schliesst sich das Ventil 2 komplett und öffnet sich wieder wenn sich das warme Wasser abgekühlt hat. Am Thermostat 6 befindet sich ein Ventilteller 7 der durch die Ausdehnung des Thermostaten 6 auf den Ventilsitz 8 drückt und so das Ventil 2 schliesst. Die Arbeitsfeder 9 unterstützt das Zusammenziehen des Thermostaten 6 bzw. des Dehnstoffelementes bei der Abkühlung des Warmwassers. Hat das über den Eingangsstutzen 4 einströmende Wasser die gewünschte bzw. die geforderte Warmwassertemperatur erreicht, schliesst sich das Ventil 2. Solange es geöffnet ist, wird das Ventil 3 welches den Desinfektionsvorgang regelt automatisch vom durchströmenden Warmwasser umspült, was ideal für den Thermostaten 16 ist, da der auf dem gleichen Temperaturniveau gehalten wird und so bei seinem Einsatz schnell reagiert. Bei geschlossenem Ventil 2 strömt nur noch eine geringe Menge Wasser über die Grundmengenbohrung 11 des Ventilzapfens 10 in den Ventilbereich des Ventils 3. Der Ventilzapfen 10 ragt durch die Ventilsitzbohrung 21 hindurch und liegt am Ventilteller 17 des Ventils 3 an. Die Abdichtung der Ventile 2, 3, da es sich vorzugsweise um Sitzventile handelt, wird über die Ventilsitze 8 erreicht. Fig. 2 zeigt die Stellung in der Ventil 2 geschlossen ist, da die gewünschte Warmwassertemperatur erreicht ist und das Warmwasser nur noch die Möglichkeit hat über die Grundmengenbohrung 11 des Ventilzapfens 10 in den Bereich des Ventils 3 zu strömen. Um den Desinfektionsvorgang durchzuführen, fliesst nun das wärmere Wasser zu Beginn nur über die Grundmengenbohrung 11 in den Bereich des Ventils 3, da das Ventil 2 bei Warmwassertemperaturen die über dem Sollwert des Normalbetriebes liegen ebenso geschlossen bleibt. So erhöht sich die Warmwassertemperatur im Bereich des Thermostaten 16 langsam. Dieser dehnt sich aus und schiebt über den Ventilteller 17 den Ventilzapfen 10 zurück, was aus Fig. 3 ersichtlich ist. So wird ein grösserer Durchlass für das wärmere Wasser der thermischen Desinfektion geöffnet und der Bereich von Ventil 3 wird schneller mit wärmerem Wasser umspült. Durch die Möglichkeit auch den zweiten Thermostaten mit dem gleichen Volumenstrom zu versorgen wie der Erste, ist eine schnellere und kontinuierlichere thermische Desinfektion der gesamten Anlage gewährleistet. Wenn die voreingestellte Temperatur zur thermischen Desinfektion erreicht ist, hat sich der Thermostat soweit ausgedehnt, dass der Ventilteller 17 an den Ventilsitz 8 drückt und den Volumenstrom somit auf null reduziert, was aus Fig. 4 ersichtlich ist. Was auch den grossen Vorteil mit sich bringt, dass die weiteren Stränge mit dem wärmeren Wasser für die thermische Desinfektion versorgt werden und keine unnötige Menge an wärmerem Wasser durch die Leitungen abfliesst, welche die Temperatur bereits erreicht haben. Kühlt sich das Wasser nun wieder etwas ab, öffnet sich das Ventil 3 wieder langsam, bis sich die gewünschte Desinfektionstemperatur am Thermostat 16 einstellt. Der Stellungswechsel welcher aus Fig. 3 und Fig. 4 ersichtlich ist, geht solange vor sich, bis der Wassererwärmer wieder auf Normaltemperatur gebracht wird und das Ventil 2 die Regelung wieder übernimmt.

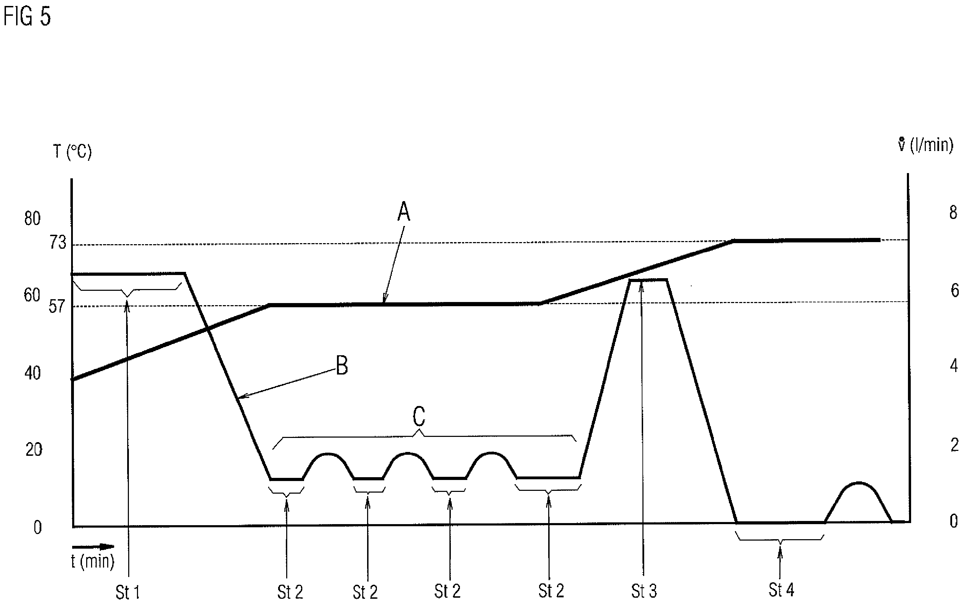

In Fig. 5 wird der Volumenstrom des Regelventils in l/min über eine bestimmte Zeit aufgezeigt. In Abhängigkeit von der Temperatur und den verschiedenen Stellungen des Regelventils wird der Volumenstromverlauf in l/min dargestellt. Die Kurve A der Wassertemperatur T zeigt den Verlauf der Temperatur in den Leitungen. Die Kurve B zeigt den Volumenstrom in l/min der das Regelventil durchfliesst. Im Bereich der Stellung St1 zeigt die Kurve B des Volumenstromes den vollen Durchfluss während ganz geöffneter Stellung, welcher aus Fig. 1 ersichtlich ist. Die Temperaturkurve A stellt die langsame Erwärmung des Wassers dar und vertikal dazu versetzt den Volumenstromverlauf. So ist ersichtlich wie am Ende der Stellung St1 bei einer Warmwassertemperatur von ca. 48°C sich der Volumenstrom verringert, das bedeutet, dass sich das Ventil 2 langsam schliesst, da es die geforderte Temperatur nach und nach erreicht. Im Abschnitt zwischen der Stellung St1 und der Stellung St2 ist das langsame Verengen des Ventils 2 ersichtlich bis zum Beginn der Stellung St2, die ist bei einer Temperatur von ca. 57°C erreicht. Daraufhin verläuft der Volumenstrom in Kurve B während der Stellung St2 konstant bei ca. 1.2 l/min. Das ist die Menge an Wasser die durch die Grundmengenbohrung 11 im Ventilzapfen 10 fliesst. Die kontinuierlichen Erhebungen in der Volumenstromkurve B während des Phase C die den Normalbetrieb darstellt, zeigt das leichte Öffnen und anschliessende Schliessen des Ventils 2. Auf diese Weise wird die gewünschte Warmwassertemperatur konstant gehalten, was aus der Temperaturkurve T ersichtlich ist, da während dieses Vorgangs die Wassertemperatur konstant auf 57°C ist. Wird nun der Wassererwärmer auf die Desinfektionstemperatur gestellt, das heisst um einiges erhöht, so fliesst das heisse Wasser vorerst nur durch die Durchlassöffnung 11 im Ventilzapfen 10 sorgt für eine Erwärmung des Wassers im Bereich des Ventils 3, Fig. 2 zeigt die entsprechende Regelventilstellung. Die Normalbetriebsphase C und regelt ausserhalb der thermischen Desinfektion den Volumenstrom im Leitungsstrang. Stellung St3 zeigt adäquat zur Fig. 3 die Stellung in der Ventil 3 den Ventilzapfen 10 zurück drückt um so den Durchlass zu vergrössern, wie aus der Volumenstromkurve B ersichtlich. Der Volumenstrom strebt somit dem max. Wert entgegen da, das heisse Wasser nun auch über den Ringspalt 22 zum Ventil 3 bzw. Thermostaten 16 fliessen kann. Die Wassertemperaturkurve A zeigt in der Stellung St3 einen raschen Anstieg der Temperatur, welcher auf den hohen Volumenstrom zurück zuführen ist. Nach dem Erreichen der voreingestellten Wassertemperatur für die thermische Desinfektion 70°C - 75°C, schliesst sich das Ventil 3 und der Volumenstrom sinkt auf null, was aus der Stellung St4 zu entnehmen ist. Um die Temperatur zu halten, regelt das Ventil stetig den Volumenstrom weiter, was wiederum eine leichte Öffnung des Ventils 3 zur Folge hat und dadurch nun, das wie schon zuvor erwähnte Regelverhalten das Schliessen von Ventil 3 und das leichte Öffnen, stattfindet. Mit Hilfe der Arbeitsfeder 14 wird der Ventilzapfen 10 gegen das Ventil 3 gedrückt um den benötigten Widerstand zu erzielen. Das geschieht so lange bis der Wassererwärmer wieder auf Normaltemperatur gebracht wird und Ventil 2 die Regelung wieder übernimmt. Die Verschlusskappe 15 ermöglicht das problemlose montieren des Ventilzapfens 10 sowie der Rückstellfeder 14, oder das Austauschen des Zapfens 10 durch einen mit einer angepassten Grundmengenbohrung 11. Falls das Regelventil manuell gesperrt werden soll ermöglicht dass das Absperrventil 20 welches kurz vor dem Ausgangsstutzen angeordnet ist.

### Bezugszeichenliste

- 1: Regelventil
- 2: Ventil zur Regelung des Normalbetriebs
- 3: Ventil zur Regelung des Desinfektionsvorgangs
- 4: Eingangsstutzen
- 5: Ausgangsstutzen
- 6: Thermostatelement (Dehnstoffelement)
- 7: Ventilteller
- 8: Ventilsitz
- 9: Arbeitsfeder
- 10: Ventilzapfen
- 11: Grundmengenbohrung
- 12: Gehäuse
- 13:
- 14: Rückstellelement
- 15: Verschlusskappe
- 16: Thermostat des Desinfektionsventils
- 17: Ventilteller des Desinfektionsventils
- 18:
- 19:
- 20: Absperrventil
- 21: Ventilsitzbohrung
- 22: Ringspalt
- 23: Ventilspalt

- *V̇*: Volumenstrom (l/min)
- T: Wassertemperatur (°C)
- St: Stellung
- A: Temperaturkurve
- B: Volumenstromkurve
- C: Normalbetrieb

## Patentansprüche

1. Regelventil (1) für Warmwasser-Zirkulationssysteme in Gebäuden mit einem Gehäuse (12) in dem zwei thermostatisch geregelte Ventile (2, 3) vorzugsweise Sitzventile angeordnet sind, wobei ein Ventil (2) konfiguriert ist, einen Normalbetrieb zu regeln, und das zweite Ventil (3) konfiguriert ist, einen Desinfektionsvorgang zu regeln, **dadurch gekennzeichnet, dass** die zwei thermostatisch geregelten Ventile (2, 3) konfiguriert sind, einen das Regelventil durchströmenden Volumenstrom unabhängig voneinander in zwei unterschiedlichen Warmwassertemperaturbereichen von null auf maximalen Volumenstrom zu regeln.

2. Regelventil (1) nach Anspruch 1, **dadurch gekennzeichnet, dass** das Ventil (3) für die Regelung des Desinfektionsvorgangs den Durchlass und somit den Volumenstrom auf null begrenzen kann, so dass bei erreichter voreingestellter max. Wassertemperatur kein Durchlass mehr besteht.

3. Regelventil (1) nach einem der Ansprüche 1 oder 2, **dadurch gekennzeichnet, dass** sich der Durchlass des Ventils (3) für die Regelung des Desinfektionsvorganges soweit öffnen lässt, dass der Volumenstrom den max. Volumenstrom des Ventils (2) für die Regelung des Normalbetriebs erreicht.

4. Regelventil (1) nach einem der Ansprüche 1 bis 3, **dadurch gekennzeichnet, dass** während des Normalbetriebes der Thermostat (16) im Ventil (3) für den Desinfektionsvorgang vom Warmwasser umspült wird um es auf Temperatur des beförderten Wassers zu halten.

5. Regelventil (1) nach einem der Ansprüche 1 bis 4, **dadurch gekennzeichnet, dass** das Regelventil (1) einen Ventilzapfen (10) zur Volumenstromregulierung aufweist.

6. Regelventil (1) nach Anspruch 5, **dadurch gekennzeichnet, dass** der Ventilzapfen (10) mindestens eine Grundmengenbohrung (11) aufweist.

7. Regelventil (1) nach einem der Ansprüche 5 bis 6, **dadurch gekennzeichnet, dass** der Ventilzapfen (10) und ein Ventilteller (17) des Ventils (3) welches den Desinfektionsvorgang regelt zwei separate Teile sind.

8. Regelventil (1) nach einem der Ansprüche 5 bis 6, **dadurch gekennzeichnet, dass** der Ventilzapfen (10) und ein Ventilteller (17) des Ventils (3) welches den Desinfektionsvorgang regelt ein Teil ist.

9. Regelventil (1) nach einem der Ansprüche 5 bis 8, **dadurch gekennzeichnet, dass** am Ventilzapfen (10) ein Rückstellelement (14) vorzugsweise eine Feder zum Erzeugen des gewünschten Gegendrucks angeordnet ist.

10. Regelventil (1) nach einem der Ansprüche 5 bis 9, **dadurch gekennzeichnet, dass** der Ventilzapfen (10) am gegenüberliegenden Ventilteller (17) anliegt.

11. Regelventil (1) nach einem der Ansprüche 5 bis 10, **dadurch gekennzeichnet, dass** der Ventilzapfen (10) durch eine Ventilsitzbohrung (21) ragt.

12. Regelventil (1) nach einem der vorangehenden Ansprüche, **dadurch gekennzeichnet, dass** der Durchmesser eines Ventiltellers (7, 17) der zur Abdichtung dient, mindestens den Durchmesser einer Ventilsitzbohrung (21) aufweist.

13. Verfahren zur Regelung der Wassertemperatur für Warmwasser-Zirkulationssysteme in Gebäuden während eines Normalbetriebs und während eines Desinfektionsvorgangs mittels Regelventils nach Anspruch 1, **dadurch gekennzeichnet, dass** der Volumenstrom während des Desinfektionsvorgangs zwischen null l/min. und dem maximal durchlassbaren Volumenstrom des Ventils (1) regelbar ist.

14. Verfahren nach Anspruch 13, **dadurch gekennzeichnet, dass** eine geforderte Grundmenge an durchzufliessendem Wasser über eine Grundmengenbohrung (11) zugeführt wird.

## Claims

1. Regulating valve (1) for hot-water circulation systems in buildings, having a housing (12) in which two thermostatically regulated valves (2, 3), preferably seat valves, are arranged, wherein one valve (2) is configured to regulate a normal operation, and the second valve (3) is configured to regulate a disinfection process, **characterized in that** the two thermostatically regulated valves (2, 3) are configured to regulate a volume flow, passing through the regulating valve, in two different hot-water temperature ranges from zero to maximum volume flow independently of one another.

2. Regulating valve (1) according to Claim 1, **characterized in that** the valve (3) for the regulation of the disinfection process can limit the passage and thus the volume flow to zero, with the result that there is no longer any passage when the preset maximum water temperature has been reached.

3. Regulating valve (1) according to either of Claims 1 and 2, **characterized in that** the passage of the valve (3) for the regulation of the disinfection process can be opened to such an extent that the volume flow reaches the maximum volume flow of the valve (2) for the regulation of the normal operation.

4. Regulating valve (1) according to one of Claims 1 to 3, **characterized in that**, during the normal operation, hot water washes around the thermostat (16) in the valve (3) for the disinfection process in order to keep it at the temperature of the delivered water.

5. Regulating valve (1) according to one of Claims 1 to 4, **characterized in that** the regulating valve (1) has a valve pin (10) for the volume flow regulation.

6. Regulating valve (1) according to Claim 5, **characterized in that** the valve pin (10) has at least one basic-quantity bore (11).

7. Regulating valve (1) according to either of Claims 5 and 6, **characterized in that** the valve pin (10) and a valve disc (17) of the valve (3) which regulates the disinfection process are two separate parts.

8. Regulating valve (1) according to either of Claims 5 and 6, **characterized in that** the valve pin (10) and a valve disc (17) of the valve (3) which regulates the disinfection process are one part.

9. Regulating valve (1) according to one of Claims 5 to 8, **characterized in that** a restoring element (14), preferably a spring, is arranged at the valve pin (10) for the purpose of generating the desired counter-pressure.

10. Regulating valve (1) according to one of Claims 5 to 9, **characterized in that** the valve pin (10) bears against the opposite valve disc (17).

11. Regulating valve (1) according to one of Claims 5 to 10, **characterized in that** the valve pin (10) projects through a valve seat bore (21).

12. Regulating valve (1) according to one of the preceding claims, **characterized in that** the diameter of a valve disc (7, 17), which serves for sealing, has at least the diameter of a valve seat bore (21).

13. Method for regulating the water temperature for hot-water circulation systems in buildings during a normal operation and during a disinfection process by means of a regulating valve according to Claim 1, **characterized in that**, during the disinfection process, the volume flow is able to be regulated between zero 1/min. and the maximum volume flow of the valve (1) which is able to be passed through.

14. Method according to Claim 13, **characterized in that** a required basic quantity of water for flowing through is supplied via a basic-quantity bore (11).

## Revendications

1. Soupape de régulation (1) pour des systèmes de circulation d'eau chaude dans des bâtiments, comprenant un boîtier (12) dans lequel sont disposées deux soupapes (2, 3) à régulation thermostatique, de préférence des soupapes à siège, une soupape (2) étant configurée pour réguler un fonctionnement normal, et la deuxième soupape (3) étant configurée pour réguler une opération de désinfection, **caractérisée en ce que** les deux soupapes (2, 3) à régulation thermostatique sont configurées de manière à réguler un débit volumique parcourant la soupape de régulation indépendamment l'une de l'autre dans deux plages de température d'eau chaude différentes d'un débit volumique nul à maximal.

2. Soupape de régulation (1) selon la revendication 1, **caractérisée en ce que** la soupape (3) pour la régulation de l'opération de désinfection peut limiter à zéro le passage, et par conséquent le débit volumique, de telle sorte que lorsque la température maximale de l'eau préajustée est atteinte, il ne se produise plus aucun passage.

3. Soupape de régulation (1) selon l'une quelconque des revendications 1 ou 2, **caractérisée en ce que** le passage à travers la soupape (3) pour la régulation de l'opération de désinfection peut être ouvert dans la mesure où le débit volumique atteint le débit volumique maximal de la soupape (2) pour la régulation du fonctionnement normal.

4. Soupape de régulation (1) selon l'une quelconque des revendications 1 à 3, **caractérisée en ce que** pendant le fonctionnement normal, le thermostat (16) de la soupape (3) pour l'opération de désinfection est rincé avec de l'eau chaude afin de le maintenir à la température de l'eau transportée.

5. Soupape de régulation (1) selon l'une quelconque des revendications 1 à 4, **caractérisée en ce que** la soupape de régulation (1) présente un tourillon de soupape (10) pour la régulation du débit volumique.

6. Soupape de régulation (1) selon la revendication 5, **caractérisée en ce que** le tourillon de soupape (10) présente au moins un alésage pour une quantité de base (11).

7. Soupape de régulation (1) selon l'une quelconque des revendications 5 et 6, **caractérisée en ce que** le tourillon de soupape (10) et un plateau de soupape (17) de la soupape (3) qui régule l'opération de désinfection sont deux pièces séparées.

8. Soupape de régulation (1) selon l'une quelconque des revendications 5 et 6, **caractérisée en ce que** le tourillon de soupape (10) et un plateau de soupape (17) de la soupape (3) qui régule l'opération de soupape sont une seule et même pièce.

9. Soupape de régulation (1) selon l'une quelconque des revendications 5 à 8, **caractérisée en ce qu'**un élément de rappel (14), de préférence un ressort, est disposé sur le tourillon de soupape (10) pour générer la contre-pression souhaitée.

10. Soupape de régulation (1) selon l'une quelconque des revendications 5 à 9, **caractérisée en ce que** le tourillon de soupape (10) s'applique contre le plateau de soupape opposé (17).

11. Soupape de régulation (1) selon l'une quelconque des revendications 5 à 10, **caractérisée en ce que** le tourillon de soupape (10) traverse un alésage de siège de soupape (21).

12. Soupape de régulation (1) selon l'une quelconque des revendications précédentes, **caractérisée en ce que** le diamètre d'un plateau de soupape (7, 17) qui sert à l'étanchéité présente au moins le diamètre d'un alésage de siège de soupape (21).

13. Procédé pour la régulation de la température de l'eau pour des systèmes de circulation d'eau chaude dans des bâtiments pendant un fonctionnement normal et pendant une opération de désinfection au moyen d'une soupape de régulation selon la revendication 1, **caractérisé en ce que** le débit volumique pendant l'opération de désinfection peut être réglé entre zéro l/min et le débit volumique maximal admissible de la soupape (1).

14. Procédé selon la revendication 13, **caractérisé en ce que** la quantité de base exigée d'eau devant circuler est acheminée par le biais d'un alésage pour une quantité de base (11).
